# EUROPÄISCHE PATENTSCHRIFT

(11) **EP 2 643 183 B1**
(45) Veröffentlichungstag und Bekanntmachung des Hinweises auf die Patenterteilung: **19.04.2017**
(21) Anmeldenummer: 11763645.6
(22) Anmeldetag: 27.09.2011
(51) Int. Cl.: B60K 15/077, B60K 15/03, F02M 37/10, F02M 37/00

(54) **TANKANORDNUNG MIT MECHANISCHEM DRUCKREGLER SOWIE FAHRZEUG**
TANK ARRANGEMENT HAVING A MECHANICAL PRESSURE REGULATOR, AND VEHICLE
ENSEMBLE RÉSERVOIR DOTÉ D'UN RÉGULATEUR DE PRESSION MÉCANIQUE ET VÉHICULE

(30) Priorität: 26.11.2010 DE 102010062075
(43) Veröffentlichungstag der Anmeldung: 02.10.2013
(73) Patentinhaber: Robert Bosch GmbH, 70442 Stuttgart (DE)
(72) Erfinder: GUTSCHER, Andreas, 71706 Markgroeningen (DE); POSSELT, Andreas, 75417 Muehlacker (DE); LORENZ, Marko, 71723 Grossbottwar (DE)
(86) Internationale Anmeldenummer: PCT/EP2011/066784
(87) Internationale Veröffentlichungsnummer: WO 2012/069237

(56) Entgegenhaltungen:
- EP-A1- 0 773 361
- WO-A1-2010/053045

## Beschreibung

### Stand der Technik

Die vorliegende Erfindung geht aus von einer Tankanordnung sowie einem Fahrzeug nach Gattung der unabhängigen Ansprüche.

Fahrzeuge mit Benzinmotor, beispielsweise Kraftfahrzeuge oder Automobile, weisen gewöhnlich einen Kraftstofftank auf, in welchem Kraftstoff bzw. Benzin vorgehalten wird und einem Kraftstoffverbraucher, beispielsweise einem Verbrennungsmotor, geregelt oder gesteuert zugeführt wird.

Übliche Tankkonfigurationen mögen hierbei beispielsweise ein Kraftstofftank mit einer Kraftstoffkammer, einer Tankeinbaueinheit, einem Tankstandgeber sowie einer Pumpeinheit, beispielsweise einer Saugstrahlpumpe, sein. Unter Verwendung der Pumpeinheit wird regelmäßig Kraftstoff aus der Kraftstoffkammer in die Tankeinbaueinheit befördert. Die Tankeinbaueinheit weist hierbei beispielsweise ein im Vergleich zur Kraftstoffkammer vergleichsweise geringes Volumen auf.

Aus der gattungsgemässen EP0773361A1 ist ein Kraftstoffversorgungssystem zum Fördern von Kraftstoff aus einem Kraftstofftank zu einem Verbrennungsmotor benannt.

In der Tankeinbaueinheit mag im Weiteren auch ein Kraftstoffpumpelement, beispielsweise eine Elektrokraftstoffpumpe, angeordnet sein, welche dem Kraftstoffverbraucher Kraftstoff aus dem Kraftstofftank und somit insbesondere aus der Tankeinbaueinheit zur Verfügung stellt. Eine Tankeinbaueinheit mag hierbei insbesondere eine zuverlässige Bereitstellung von Kraftstoff an den Kraftstoffverbraucher ermöglichen. Der Tankstandgeber mag insbesondere ein Signal bezüglich des Füllstandes der Kraftstoffkammer bereitstellen.

Weiterhin mag ein Kraftstofftank auch aus zwei oder mehr Kraftstoffkammern bestehen. Diese mögen räumlich und funktional getrennt oder aber im Falle beispielsweise eines Satteltanks mit einer Hauptkraftstoffkammer sowie einer Sattelkraftstoffkammerauch miteinander verbunden sein. Ein derartiger Kraftstofftank mag gleichfalls eine oder mehrere Tankeinbaueinheiten, zwei oder mehrere Tankstandgeber sowie zwei oder mehrere Pumpeinheiten bzw. Saugstrahlpumpen aufweisen. Insbesondere vorteilhaft ist es, je Kraftstoffkammer zumindest einen Tankstandgeber sowie eine Pumpeinheit vorzusehen.

### Offenbarung der Erfindung

Demgemäß wird eine Tankanordnung sowie ein Kraftfahrzeug aufweisend eine erfindungsgemäße Tankanordnung mit einem Pumpeinheit-Management gemäß den unabhängigen Ansprüchen angezeigt, dadurch gekennzeichnet, dass das Druckregelelement als ein mechanischer Druckregler bzw. als ein passives Überdruckventil ausgebildet ist.

Unter Verwendung der Pumpeinheit, beispielsweise einer Saugstrahlpumpe, mag aus unterschiedlichen, separaten Tankbereichen bzw. Kraftstoffkammern Kraftstoff in den Topf der Tankeinbaueinheit bzw. der Haupttankeinbaueinheit förderbar sein. Ein Antrieb einer Saugstrahlpumpe mag beispielsweise aus dem vorlaufenden bzw. dem rücklaufenden Förderstrom des Kraftstoffpumpelementes oder durch Verwendung eines zweiten Kraftstoffpumpelementes realisiert sein. In diesem Fall mag das zweite Kraftstoffpumpelement ausschließlich zum Betrieb der Saugstrahlpumpe bzw. Saugstrahlpumpen eingerichtet sein und somit eine Saugstrahlpumpen-Treibmenge an Kraftstoff bereitstellen bzw. fördern.

Weiterhin relevant mag eine Druckbegrenzung bzw. eine Druckregelung im Abstellfall sein. Im heißen Abstellfall, beispielsweise eines Verbrennungsmotors, kommt es zu einer Nacherwärmung des Kraftstoffsystems. Hierdurch mag der Systemdruck in einem Leitungssystem ansteigen, beispielsweise zwischen einem Kraftstoffpumpelement und einem Kraftstoffverbraucher wie den Einspritzventilen eines Verbrennungsmotors. Um Komponenten des Leitungssystems bzw. der Kraftstoffzufuhr vor Schäden zu schützen, mag ein Druckbegrenzungsventil im Kraftstoffsystem bzw. im Leitungssystem angeordnet sein.

Gleichfalls mag eine Erwärmung durch Sonneneinstrahlung zu einem Druckaufbau im Leitungssystem führen. Auch hierbei mag eine Begrenzung eines maximalen Systemdrucks notwendig sein, um zum Beispiel Leckagen an den Einspritzventilen zu begrenzen bzw. zu verhindern.

Für einen Neustart eines Verbrennungsmotors mag es hingegen vorteilhaft sein, wenn der notwendige Betriebsdruck, somit ein herrschender Leitungsdruck bzw. ein geforderter Systemdruck, nicht wieder komplett neu aufgebaut werden muss, somit zumindest teilweise im Leitungssystem erhalten wird.

Eine Bedarfsregelung bzw. eine Bedarfssteuerung in einem Kraftstoffversorgungssystem mag beispielsweise vorsehen, dass ein Kraftstoffpumpelement, abhängig von einem Kraftstoffbedarf bzw. einem Betriebspunkt auf einen bestimmten Wert geregelt wird, somit von einem definierten Signal angesteuert wird.

Für Systeme mit Benzindirekteinspritzung mögen gesteuerte Systeme vorgesehen sein, welche beispielsweise ohne ein Feedbacksignal durch einen Kraftstoffniederdrucksensor auskommen. Demgegenüber muss jedoch bei Benzindirekteinspritzung, insbesondere bei hohen Temperaturen, ein minimaler Kraftstoffniederdruck aufrechterhalten werden, um zu vermeiden, dass eine Hochdruckpumpe mit dampfförmigem Kraftstoff betrieben wird.

Weiterhin ist in einem rein gesteuerten Betrieb, somit einem Betrieb ohne Regelung, ein gewisser Vorhalt aufgrund beispielsweise einer Serienstreuung eines Kraftstoffpumpelementes vorgesehen aufgrund des Fehlens eines Niederdrucksignals, somit eines Feedbacksignals. Hierunter ist insbesondere zu verstehen, dass ein Kraftstoffpumpelement mit einem definierten Signal angesteuert wird, der sich hierdurch ergebende Druck bzw. die sich hieraus ergebende Pumpleistung aufgrund einer Serienstreuung der Fertigung des Kraftstoffpumpelementes bzw. des Kraftstoffversorgungssystems nicht präzise, sondern nur in einem gewissen definierten Bereich vorhersagbar ist. In einem geregelten System würde nun ein Feedback-Signal des Kraftstoffpumpelementes verwendet werden, welches mit einem Druck bzw. einer Pumpleistung korreliert, um hierdurch den gewünschten Betriebspunkt des Kraftstoffpumpelementes präzise einstellen zu können. In einem gesteuerten Betrieb jedoch steht ein derartiges Feedback-Signal nicht zur Verfügung, so dass ein gewisser Sicherheitsvorhalt in die Ansteuerung des Kraftstoffpumpelementes einbezogen sowie eine gewisse Ungenauigkeit in Kauf genommen werden muss.

Die erfindungsgemäße Tankanordnung mag hierbei die Aktivierung einer Pumpeinheit, zum Beispiel die Zuschaltstrategie einer Saugstrahlpumpe, optimieren und gleichzeitig eine Druckbegrenzung in einem Abstellfall bzw. in einem Erwärmungsfall bereitstellen. Weiterhin mag die Minimierung eines Vorhaltens bei rein gesteuerten Systemen, beispielsweise eines Kraftstoffpumpelementes, durch Adaption der Systemstreuung ermöglicht werden, z.B. durch indirekte Rückmeldung einer Pumpleistung des Kraftstoffpumpelementes.

Insbesondere mag das Zu- bzw. Abschalten der Pumpeinheit, beispielsweise einer Saugstrahlpumpe, unter Verwendung eines mechanischen Druckreglers, z.B. ausgebildet als ein mechanischer Druckregler oder ein passives Überdruckventil, erfolgen. Gleichfalls mag der mechanische Druckregler eine Begrenzung des Systemdrucks eines Leitungssystems in einem Abstellfall durch Nacherwärmung bzw. durch anderweitige Erwärmung ermöglichen. Da sich ein derartiger mechanischer Druckregler bei einem relativ präzise vorgegebenen Öffnungsdruck öffnen bzw. zu schließen vermag, mag hierdurch eine Adaption der Serienstreuung eines Kraftstoffpumpelementes vorgenommen werden.

So wird eine Pumpeinheit nur dann betrieben, wenn ein Bedarf besteht. Die Fördermenge eines Kraftstoffpumpelementes, beispielsweise die Treibmenge für eine Saugstrahlpumpe, mag je nach Tankbefüllungsstand und Betriebspunkt hierdurch zeitweise entfallen. Weiterhin lässt sich ein Vorhalt aufgrund von Systemstreuung bei gesteuerten Systemen reduzieren. Auch ergibt sich ein verringerter Verbrauch, somit eine reduzierte CO₂-Belastung sowie eine verringerte Bauteilbelastung. Herstellungskosten für ein System lassen sich durch Kombination eines Pumpeinheit-Managements mit gleichzeitiger Druckbegrenzungsfunktion reduzieren. Durch die indirekte Messung der Pumpleistung eines Kraftstoffpumpelementes mag sich gleichzeitig ein rein gesteuertes System leichter realisieren lassen.

Die vorliegende Erfindung verwendet eine Saugstrahlpumpe, welche über einen mechanischen Druckregler betrieben wird. In anderen Worten wird die Saugstrahlpumpe bzw. werden die Saugstrahlpumpen dann betrieben, wenn der Systemdruck eines Leitungssystems den Öffnungsdruck des mechanischen Druckreglers übersteigt und insbesondere eine ausreichende Treibmenge zur Verfügung stellt. Dies mag insbesondere dann auftreten, wenn der Systemdruck aufgrund von bestimmten Betriebsbedingungen ohnehin erhöht wird, zum Beispiel in einem Startfall oder bei Volllast. Gleichfalls ist es auch denkbar, dass die Saugstrahlpumpe durch eine gezielte Druckerhöhung in Betrieb gesetzt wird, zum Beispiel wenn die Tankeinbaueinheit einen niedrigen Kraftstofftank aufweist.

Insbesondere mag die vorliegende Erfindung bei Standardtanks mit eine Kraftstoffkammer sowie Satteltanks zum Einsatz kommen, bei denen neben einer Saugstrahlpumpe in der Hauptkraftstoffkammer, in welcher die Tankeinbaueinheit angeordnet ist, auch eine bzw. mehrere Transferpumpeinheiten bzw. Transfer-Saugstrahlpumpen in einer Sattel-Kraftstoffkammer verwendet werden, um entweder die Hauptkammer des Kraftstofftanks oder auch gleich die Tankeinbaueinheit mit Kraftstoff zu befüllen.

In einem derartigen Fall mag ein Öffnungsdruck eines erfindungsgemäßen Druckreglers für die Saugstrahlpumpe der Hauptkraftstoffkammer nahe einem üblichen Betriebsdruck gewählt werden. Hierdurch wird die Hauptkraftstoffkammer kontinuierlich befüllt, außer der Leitungsdruck wird gezielt, zum Beispiel in einer Leerlaufphase bei ausreichend voller Tankeinbaueinheit, abgesenkt.

Der Öffnungsdruck von einem oder mehreren mechanischen Druckreglern, welcher beispielsweise an einer oder mehreren Transfer-Saugstrahlpumpen angeordnet ist, mag über einem gewöhnlichen Betriebsdruck liegen. Somit lassen sich durch gezielte Erhöhung des Betriebsdruckes im Leitungssystem die Transfersaugstrahlpumpen aktivieren, welche gleichfalls die Hauptkraftstoffkammer bzw. die Tankeinbaueinheit zu füllen vermögen.

Eine Entleerung einer Kraftstoffkammer mag durch einen dort angeordneten Tankstandgeber detektiert werden. Das Signal des Tankstandgebers, somit das Signal, dass sich eine bestimmte Kraftstoffkammer leert, mag als eine Art Feedback-Signal verstanden werden, welcher Betriebsdruck in einem Leitungssystem derzeit vorliegt.

Anhand eines Aufbaus eines Satteltanks mit zwei Saugstrahlpumpen, welche beide jeweils mit einem mechanischen Druckregler versehen sind, wird nachfolgend die prinzipielle Funktionsweise der vorliegenden Erfindung beschrieben.

Im Falle, dass kein Tankstandgeber ein Signal zurückmeldet, wonach eine Kraftstoffkammer geleert wird, mag auf einen Systemdruck unter einem normalen Betriebsdruck geschlossen werden, somit auf einem Leitungsdruck, welcher unter den Öffnungsdrücken der beiden mechanischen Druckreglern liegt. Wenn nun nur der Tankstandgeber der Hauptkraftstoffkammer ein Leeren der Kraftstoffkammer detektiert, mag auf einen Systemdruck geschlossen werden, welcher zwischen dem ersten Betriebsdruck, bei welchem der erste Druckregler öffnet, sowie einem zweiten, erhöhten Betriebsdruck, bei welchem der Transferdruckregler öffnet, geschlossen werden. Liefern beide Tankstandgeber ein Signal, wonach sich die entsprechenden Kraftstoffkammern leeren, so kann auf einen Systemdruck über dem zweiten, erhöhten Betriebsdruck geschlossen werden.

Ein Kraftstoffpumpelement mag beispielsweise durch ein pulsweitenmoduliertes Signal angesteuert werden. Hierbei wird das Ansteuersignal bei konstanter Frequenz über den Tastgrad moduliert, somit in der Breite eines Impulses verändert. So mag beispielsweise der Tastgrad bzw. ein Ansteuertastverhältnis eines Signals zur Ansteuerung eines Kraftstoffpumpelementes so lange erhöht werden, bis unter Verwendung eines Tankstandgebers eine Verringerung des Inhalts einer Kraftstoffkammer angezeigt wird. Somit korreliert bei diesem Ansteuertastverhältnis der derzeit im Leitungssystem vorherrschende Systemdruck mit dem jeweils bekannten Öffnungsdruck eines Druckreglers. Hierdurch ist nun bekannt, welches Ansteuertastverhältnis ein Kraftstoffpumpelement derart anzusteuern vermag, so dass ein bestimmter Systemdruck erzeugt wird.

Auch mag der Druck, ausgehend von einem hohen Systemdruck, so lange verringert werden, bis die Sattelseite eines Satteltanks nicht mehr geleert wird, da sich der dort angeordnete mechanische Druckregler aufgrund des Absenkens des Systemdrucks schließt.

Durch den Verbau von mechanischen Druckreglern mag auch der Druck in einem Heißabstellungsfall begrenzt und auf einem geforderten maximalen Systemdruck gehalten werden. Bei mehreren verbauten mechanischen Druckreglern ist hierbei derjenige Druckregler maßgeblich, welcher den geringsten Öffnungsdruck aufweist.

Ausführungsbeispiele der Erfindung sind in den nachfolgenden Zeichnungen dargestellt und in der zugehörigen Beschreibung näher erläutert.

Es zeigen
- Figur 1: eine exemplarische Ausführungsform einer Tankanordnung gemäß der vorliegenden Erfindung; und
- Figur 2: eine weitere exemplarische Ausführungsform einer Tankanordnung gemäß der vorliegenden Erfindung.

### Ausführungsformen der Erfindung

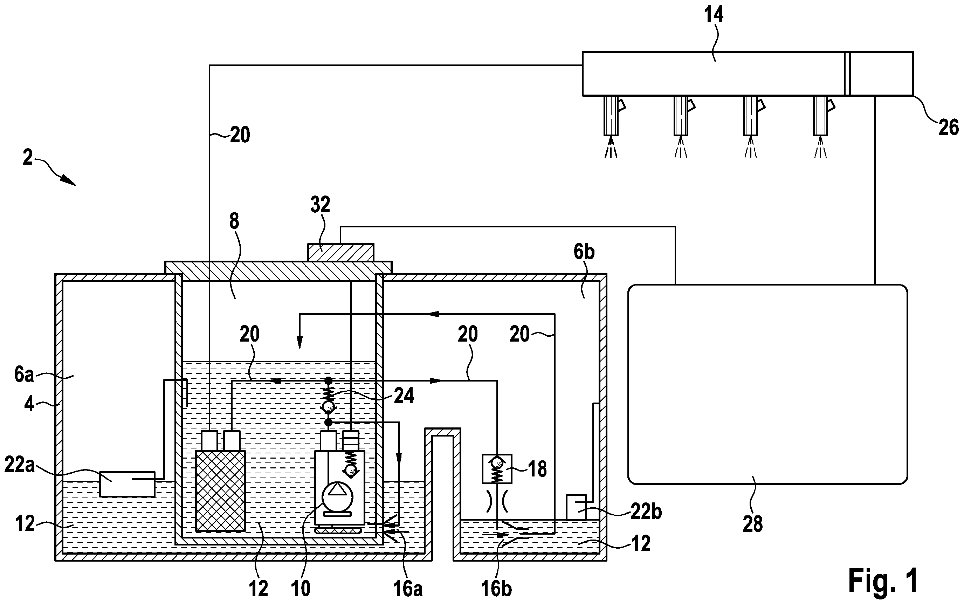

Figur 1 zeigt eine exemplarische Ausführungsform einer Tankanordnung gemäß der vorliegenden Erfindung.

Tankanordnung 2 ist in Figur 1 mit einem Kraftstofftank 4, ausgebildet als ein Satteltank, dargestellt. Kraftstofftank 4 weist zwei Kraftstoffkammern 6a,b auf, welche eine Tankeinbaueinheit 8 aufweisen. Die Tankeinbaueinheit 8 ist über eine Pumpeinheit 16a direkt mit der Kraftstoffkammer 6a verbunden. Die weitere Kraftstoffkammer 6b, weist eine weitere Pumpeinheit 16b, exemplarisch ausgebildet als Saugstrahlpumpe, auf, welche ebenfalls eingerichtet ist, Kraftstoff 12, hier aus der Kraftstoffkammer 6b, in die Hauptkraftstoffkammer 6a bzw. direkt in die Tankeinbaueinheit 8 zu befördern.

In der Tankeinbaueinheit angeordnet ist Kraftstoffpumpelement 10, beispielsweise eine Elektrokraftstoffpumpe, welche über ein Filterelement 34, z.B. einen Benzinfilter, mit einem Kraftstoffverbraucher 14 über das Leitungssystem 20 verbunden ist. Der Kraftstoffverbraucher 14 ist hierbei dargestellt als eine Kraftstoffleiste eines Verbrennungsmotors.

Das Kraftstoffpumpelement 10 vermag Kraftstoff 12 direkt aus der Tankeinbaueinheit aufzunehmen und unter Verwendung des Leitungssystems 20 zu befördern. Unmittelbar am Ausgang der Kraftstoffpumpe 10 angeordnet ist die Versorgungsleitung der Pumpeinheit 16a, exemplarisch ausgebildet als Saugstrahlpumpe. Sobald das Kraftstoffpumpelement 10 aktiviert wird, wird somit unter Verwendung der Pumpeinheit 16a Kraftstoff 12 aus Kraftstoffkammer 6a in die Tankeinbaueinheit 8 befördert.

Hinter der Abzweigung zu Pumpeinheit 16a ist im Leitungssystem 20 ein Druckventil 24, z.B. ausgebildet als ein Rückschlagventil, angeordnet, welches bei einem definierten Leitungsdruck im Leitungssystem 20, z.B. von 0,5 bar, öffnet bzw. bei einem geringeren Druck schließt. Das Leitungssystem 20 verzweigt nach Druckventil 24 in Richtung des Kraftstoffverbrauchers 14 sowie in Richtung der Kraftstoffkammer 6b. In der Kraftstoffkammer 6b angeordnet ist Druckregelelement 18 sowie nachfolgend Pumpeinheit 16b.

Druckregelelement 18 mag beispielsweise ein mechanischer Druckregler bzw. ein passives Überdruckventil sein, welches bei einem Leitungssystemdruck im Leitungssystem 20 größer einem definierten Grenzdruck, z.B. im Bereich von 4 bis 5 bar, öffnet. Somit wird bei Überschreiten des Öffnungsdruckes des Druckregelelementes 18 die Pumpeinheit 16b aktiviert und über deren Rückführung Kraftstoff 12 ebenfalls in die Tankeinbaueinheit 8 befördert.

In jeder der Kraftstoffkammern 6a, 6b ist ein Tankstandgeber 22a,b angeordnet, welcher insbesondere detektieren mag, wenn Kraftstoff 12 aus der jeweiligen Kraftstoffkammer 6a,b unter Verwendung der Pumpeinheiten 16a,b in die Tankeinbaueinheit 8 befördert wird.

Wird das Kraftstoffpumpelement 10 mit einem Ansteuersignal betrieben, welches einen Systemdruck unter dem definierten Öffnungsdruck des Druckventils 24 hervorruft, z.B. von unter 0,5 bar, so mag insbesondere ausschließlich Kraftstoff 12 aus Kraftstoffkammer 6a in die Tankeinbaueinheit 8 befördert werden. Dies resultiert hieraus, da in diesem Fall Druckventil 24 noch nicht öffnet.

Bei einem Systemdruck über dem definierten Öffnungsdruck des Druckventils 24, jedoch unter dem definierten Öffnungsdruck des Druckregelelementes 18 wird im Wesentlichen, neben der Pumpleistung der Pumpeinheit 16a, Kraftstoff 12 über das Leitungssystem 20 durch den Kraftstofffilter 34 zum Kraftstoffverbraucher 14 transportiert.

Nun mag das Kraftstoffpumpelement 10 derart angesteuert werden, bis ein Systemdruck im Leitungssystem 20 erzielt wird, welcher eine Öffnung des Druckregelelementes 18 und somit eine Kraftstoffförderung durch Pumpeinheit 16b hervorruft. Eine Öffnung des Druckregelelementes 18 mag aufgrund der Kraftstoffförderung, somit dem Leeren der Kraftstoffkammer 6b, von Tankstandgeber 22b detektiert werden. Ein entsprechendes Detektionssignal des Tankstandgebers 22b mag an eine Elektronik 28 gemeldet werden, welche z.B. über ein Koppelelement 32 auch an das Kraftstoffpumpelement 10 angeschlossen ist.

Elektronik 28 mag somit über die Detektierung eines Signals des Tankstandgebers 22b feststellen, dass der Leitungsdruck im Leitungssystem 20 dem Öffnungsdruck des Druckregelelementes 18 entspricht. Somit mag sich bei einem definierten Öffnungsdruck des Druckelementes 18, von z.B. 4 bzw. 5 bar, unter Verwendung des Tankstandgebers 22b detektieren lassen, dass der Systemdruck des Leitungssystems 20 gleichfalls bei diesem definierten Öffnungsdruckliegt, ohne selbst ein geeichtes bzw. präzises Feedback-Signal vom Kraftstoffpumpelement 10 zu benötigen bzw. zu erhalten.

Hierdurch lässt sich indirekt über das Signal des Tankstandgebers 22b auf eine Leistung bzw. einen durch Kraftstoffpumpelement 10 hervorgerufenen Systemdruck schließen, ohne eine präzise Rückmeldung von Kraftstoffpumpelement 10 selbst zu erhalten. Hierdurch mag eine Serienstreuung in der Ansteuerung des Kraftstoffpumpelementes 10 ausgeglichen werden.

Weiter angeordnet am Kraftstoffverbraucher 14 ist ein Drucksensor 26, welcher gleichfalls an Elektronik 28 angeschlossen ist. Der Drucksensor liefert hierbei Druckinformation an Elektronik 28, welche diese zur Ansteuerung des Kraftstoffpumpelementes 10 verwendet.

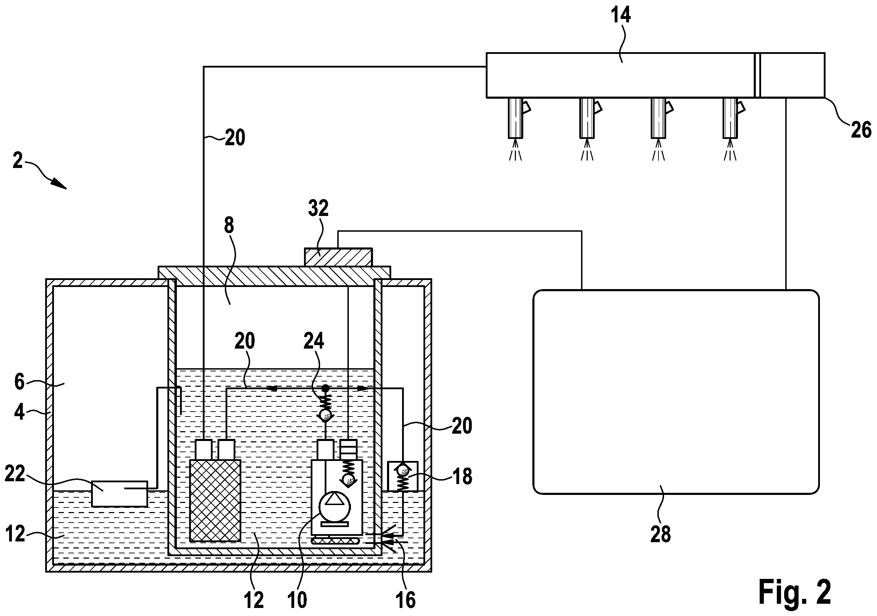

Weiter Bezug nehmend auf Figur 2, welche eine weitere exemplarische Ausführungsform einer Tankanordnung gemäß der vorliegenden Erfindung zeigt.

Figur 2 entspricht im Wesentlichen dem Aufbau gemäß Figur 1, wobei in Figur 2 jedoch kein Satteltank mit Kraftstoffkammern 6a,b dargestellt ist, sondern vielmehr ein Kraftstofftank 4 mit nur einer Kraftstoffkammer 6. So ist das Druckregelelement 18 an das Leitungssystem 20 derart angeschlossen, so dass sich das Druckregelelement 18 bei überschreiten eines Grenzdruckes des öffnet und eine Pumpeinheit 16, zum Beispiel eine Saugstrahlpumpe, aktiviert, wodurch Kraftstoff 12 in die Tankeinbaueinheit 8 befördert werden mag. Die Aktivierung der Saugstrahlpumpe 16 und somit ein Öffnen bzw. Schließen des Druckregelelementes 18 mag über den Tankstandgeber 22 detektiert werden.

Im Falle, dass die Tankeinbaueinheit 8 im Wesentlichen vollständig gefüllt ist, mag eine Situation denkbar sein, in der der Tankstandgeber 22 auch bei aktivierter Pumpeinheit 16 aufgrund von Treibstoff-Überlauf der Tankeinbaueinheit 8 in die Kraftstoffkammer 6 im Wesentlichen keine Verminderung der Kraftstoff-Füllmenge zu detektieren vermag.

## Patentansprüche

1. Kraftstoffversorgungssystem zum Fördern von Kraftstoff aus einem Kraftstofftank (4) mit Kraftstoffkammern (6,6a,b) zu einem Verbrennungsmotor (14), das Kraftstoffversorgungssystem aufweisend
- eine Tankeinbaueinheit (8),
- ein in der Tankeinbaueinheit (8) angeordnetes Kraftstoffpumpelement (10), das eingerichtet ist, Kraftstoff (12) aus der Tankeinbaueinheit (8) dem Verbrennungsmotor (14) zur Verfügung zu stellen,
- eine Saugstrahlpumpe (16,16a,b), die über eine Leitung (20) mit dem Kraftstoffpumpelement (10) verbunden ist und eingerichtet ist, Kraftstoff (12) aus der Kraftstoffkammer (6,6a,b) in die Tankeinbaueinheit (8) zu befördern,
- ein Druckregelelement (18), das in der Leitung (20) zwischen dem Kraftstoffpumpelement (10) und der Saugstrahlpumpe (16,16a,b) angeordnet ist und als ein mechanischer Druckregler ausgebildet ist,
- einen Tankstandgeber (22,22a,b) zur Erfassung eines Füllstandes in der Kraftstoffkammer (6,6a,b),
**dadurch gekennzeichnet, dass**
das Kraftstoffpumpelement (10) derart angesteuert wird, dass ein Systemdruck in der Leitung (20) erzielt wird, der eine Öffnung des Druckregelelementes (18) und somit eine Kraftstoffförderung durch die Saugstrahlpumpe (16,16a,b) hervorruft, wobei das Kraftstoffpumpelement (10) in Abhängigkeit eines Signals des Tankstandgebers (22,22a,b) derart gesteuert wird, dass ausgehend von einem Systemdruck, bei dem das Druckregelelement (18) geschlossen ist, der Systemdruck so lange erhöht wird, bis unter Verwendung des Tankstandgebers (22,22a,b) ein Absinken des Tankstandes detektierbar ist, und/oder wobei das Kraftstoffpumpelement (10) derart ansteuerbar ist, dass ausgehend von einem Systemdruck, bei dem das Druckregelelement (18) geöffnet ist, der Systemdruck so lange erniedrigt wird, bis unter Verwendung des Tankstandgebers (22,22a,b) kein Absinken des Tankstandes mehr detektierbar ist.

2. Kraftstoffversorgungssystem nach Anspruch 1, wobei das Druckregelelement (18) eingerichtet ist, einen geforderten Systemdruck zwischen dem Kraftstoffpumpelement (10) und dem Verbrennungsmotor (14) aufrecht zu erhalten.

3. Kraftstoffversorgungssystem gemäß zumindest einem der vorhergehenden Ansprüche, wobei das Druckregelelement (18) eingerichtet ist, einen über einem geforderten Systemdruck erhöhten Systemdruck auf den geforderten Systemdruck abzubauen.

4. Kraftstoffversorgungssystem gemäß zumindest einem der vorhergehenden Ansprüche, wobei ein Vorsteuerkennfeld des Kraftstoffpumpenelements (10) in Abhängigkeit eines Signals, insbesondere des Tankstandgebers (22,22a,b), auf einen oder mehrere Systemdrücke justiert werden kann.

5. Kraftstoffversorgungssystem gemäß zumindest einem der vorhergehenden Ansprüche, wobei das Kraftstoffpumpelement (10) unter Verwendung eines pulsweitenmodulierten Signals ansteuerbar ist; und wobei das pulsweitenmodulierte Signal in Abhängigkeit eines Signals des Tankstandgebers (22,22a,b) änderbar ist.

## Claims

1. Fuel supply system for conveying fuel out of a fuel tank (4) having fuel chambers (6, 6a, b) to an internal combustion engine (14), the fuel supply system having
- a tank installation unit (8),
- a fuel pump element (10) which is arranged in the tank installation unit (8) and is set up to provide fuel (12) from the tank installation unit (8) to the internal combustion engine (14),
- a suction jet pump (16, 16a, b) which is connected via a line (20) to the fuel pump element (10) and is set up to convey fuel (12) out of the fuel chamber (6, 6a, b) into the tank installation unit (8),
- a pressure regulating element (18) which is arranged in the line (20) between the fuel pump element (10) and the suction jet pump (16, 16a, b) and is configured as a mechanical pressure regulator,
- a fuel level sensor (22, 22a, b) for detecting a filling level in the fuel chamber (6, 6a, b),
**characterized in that** the fuel pump element (10) is actuated in such a way that a system pressure is achieved in the line (20), which system pressure brings about opening of the pressure regulating element (18) and therefore fuel conveying by way of the suction jet pump (16, 16a, b), the fuel pump element (10) being controlled in a manner which is dependent on a signal of the fuel level sensor (22, 22a, b) in such a way that, proceeding from a system pressure, at which the pressure regulating element (18) is closed, the system pressure is increased until lowering of the fuel level can be detected using the fuel level sensor (22, 22a, b), and/or it being possible for the fuel pump element (10) to be actuated in such a way that, proceeding from a system pressure, at which the pressure regulating element (18) is open, the system pressure is lowered until no further decrease in the fuel level can be detected using the fuel level sensor (22, 22a, b).

2. Fuel supply system according to Claim 1, the pressure regulating element (18) being set up to maintain a required system pressure between the fuel pump element (10) and the internal combustion engine (14).

3. Fuel supply system according to at least one of the preceding claims, the pressure regulating element (18) being set up to dissipate a system pressure which is increased above a required system pressure to the required system pressure.

4. Fuel supply system according to at least one of the preceding claims, it being possible for a pilot control characteristic diagram of the fuel pump element (10) to be adjusted to one or more system pressures in a manner which is dependent on a signal, in particular of the fuel level sensor (22, 22a, b).

5. Fuel supply system according to at least one of the preceding claims, it being possible for the fuel pump element (10) to be actuated using a pulse-width-modulated signal; and it being possible for the pulse-width-modulated signal to be changed in a manner which is dependent on a signal of the fuel level sensor (22, 22a, b).

## Revendications

1. Système d'alimentation en carburant pour refouler du carburant d'un réservoir de carburant (4), comprenant des chambres de carburant (6, 6a,b) conduisant à un moteur à combustion interne (14), le système d'alimentation en carburant présentant :
- une unité de montage de réservoir (8),
- un élément de pompe à carburant (10) disposé dans l'unité de montage de réservoir (8), qui est prévu pour fournir du carburant (12) provenant de l'unité de montage de réservoir (8) au moteur à combustion interne (14),
- une pompe à jet aspirant (16, 16a,b), qui est raccordée à l'élément de pompe à carburant (10) par le biais d'une conduite (20) et qui est prévue pour refouler du carburant (12) hors de la chambre à carburant (6, 6a,b) dans l'unité de montage de réservoir (8),
- un élément de régulation de la pression (18), qui est disposé dans la conduite (20) entre l'élément de pompe à carburant (10) et la pompe à jet aspirant (16, 16a,b) et qui est réalisé sous forme de régulateur de pression mécanique,
- un détecteur de niveau de réservoir (22, 22a,b) pour détecter un niveau de remplissage dans la chambre à carburant (6, 6a,b),
**caractérisé en ce que**
l'élément de pompe à carburant (10) est commandé de telle sorte qu'une pression du système dans la conduite (20) soit obtenue, laquelle provoque une ouverture de l'élément de régulation de la pression (18) et par conséquent un refoulement de carburant à travers la pompe à jet aspirant (16, 16a,b), l'élément de pompe à carburant (10) étant commandé en fonction d'un signal du détecteur de niveau de réservoir (22, 22a, 22b) de telle sorte qu'à partir d'une pression de système à laquelle l'élément de régulation de pression (18) est fermé, la pression de système soit augmentée jusqu'à ce qu'une diminution du niveau de réservoir puisse être détectée en utilisant le détecteur de niveau de réservoir (22, 22a,b) et/ou l'élément de pompe à carburant (10) pouvant être commandé de telle sorte qu'à partir d'une pression de système à laquelle l'élément de régulation de pression (18) est ouvert, la pression de système soit abaissée jusqu'à ce qu'aucune diminution du niveau de réservoir ne puisse plus être détectée en utilisant le détecteur de niveau de réservoir (22, 22a,b).

2. Système d'alimentation en carburant selon la revendication 1, dans lequel l'élément de régulation de pression (18) est prévu pour maintenir une pression de système exigée entre l'élément de pompe à carburant (10) et le moteur à combustion interne (14).

3. Système d'alimentation en carburant selon au moins l'une quelconque des revendications précédentes, dans lequel l'élément de régulation de la pression (18) est prévu pour réduire à la pression de système exigée une pression de système augmentée au-dessus d'une pression de système exigée.

4. Système d'alimentation en carburant selon au moins l'une quelconque des revendications précédentes, dans lequel un champ caractéristique de commande pilote de l'élément de pompe à carburant (10) peut être ajusté en fonction d'un signal, en particulier du détecteur de niveau de réservoir (22, 22a,b), à une ou plusieurs pressions de système.

5. Système d'alimentation en carburant selon au moins l'une quelconque des revendications précédentes, dans lequel l'élément de pompe à carburant (10) peut être commandé en utilisant un signal modulé en largeur d'impulsion et le signal modulé en largeur d'impulsion pouvant être modifié en fonction d'un signal du détecteur de niveau de réservoir (22, 22a,b).
